# EUROPÄISCHE PATENTSCHRIFT

(11) **EP 1 582 457 B1**
(45) Veröffentlichungstag und Bekanntmachung des Hinweises auf die Patenterteilung: **13.12.2006**
(21) Anmeldenummer: 05003493.3
(22) Anmeldetag: 18.02.2005
(51) Int. Cl.: B64D 11/00, B64D 11/06, B60N 2/46, A47C 7/72

(54) **Fahrzeugsitz, insbesondere Fluggastsitz**
Vehicle seat, in particular airline passenger seat
Siège de véhicule, en particulier siège pour passagers d'avion

(30) Priorität: 30.03.2004 DE 102004016641
(43) Veröffentlichungstag der Anmeldung: 05.10.2005
(73) Patentinhaber: Recaro Aircraft Seating GmbH & Co., 74523 Schwäbisch Hall (DE)
(72) Erfinder: Schikora, Stefan, 88239 Wangen (DE)
(74) Vertreter: Bartels, Martin Erich Arthur

(56) Entgegenhaltungen:
- DE-A1- 10 118 496
- DE-A1- 19 705 754
- US-A- 5 076 524
- US-A- 5 316 369
- US-A- 5 732 919

## Beschreibung

Die Erfindung betrifft einen Fahrzeugsitz, insbesondere Fluggastsitz, mit den Merkmalen des Oberbegriffes des Patentanspruches 1.

Durch die DE 101 32 282 A1 ist ein Fahrzeugsitz in Form eines Fluggastsitzes bekannt mit einer eine Armauflage bildenden Konsole mit einer Aufnahme für eine Platte, die mit der Konsole über einen Einstellmechanismus gelenkig verbunden und durch diesen aus einer in der Konsole versenkten Ruhestellung wahlweise in eine aus der Konsole nach oben herausgefahrene, die seitliche Begrenzung des Sitzteils nach oben verlängernde Trennelementstellung und aus dieser in eine eine Tischfläche bildende Horizontalstellung einstellbar ist. Bei Verkehrsflugzeugen mit Sitzreihen, in denen mehrere Sitze nebeneinander angeordnet sind, wird angestrebt, den nebeneinander sitzenden Fluggästen ein möglichst hohes Maß an Privatsphäre zur Verfügung zu stellen und die bekannte Möglichkeit, aus der Konsole zwischen zwei nebeneinander liegenden Sitzen ein Trennelement auszufahren, liefert einen wesentlichen Beitrag zur Erreichung dieses Zieles. Die als Trennelement nach oben aus der Konsole ausgefahrene Platte bildet eine Art Abschirmung des Sitzbereiches gegenüber dem Sitzbereich des daneben angeordneten Fluggastsitzes. Zwar erlaubt die bekannte Lösung, die Platte nicht nur als Trennelement zu benutzen, sondern nach Überführen in die Horizontalstellung auch als Tischfläche; trotz dieser Doppelnutzung sind aber weitere auch anders geartete Nutzungsmöglichkeiten für die Aufnahme der Konsole nicht angedacht.

Durch die US-A-5 076 524 ist ein gattungsgemäßer Fahrzeugsitz, insbesondere Fluggastsitz, bekannt mit Sitzkomponenten in Form eines Sitzteils, einer Rückenlehne und zumindest einer das Sitzteil seitlich begrenzenden, eine Armauflage bildenden Konsole, die eine Aufnahme aufweist, wobei in der Aufnahme mindestens ein Bildschirm in einer Ruhestellung versenkbar ist und über ein Einstellteil mit Gelenkstellen aus der Ruhestellung in eine Gebrauchsstellung und umgekehrt bringbar ist, wobei in der Gebrauchsstellung für einen Sitzbenutzer der Bildschirminhalt einsehbar ist, und wobei das Einstellteil ein Verschiebeteil aufweist, das längsverfahrbar innerhalb einer Führung der Konsole geführt ist.

Bei der bekannten Lösung ist für die Aufnahme zweier benachbarter Bildschirme eine die Aufnahme bildende Konsole durch eine Mittenwand getrennt, an deren stirnseitigen Bereich benachbart angrenzend seitlich je ein U-förmiges Führungshohlprofil angeordnet ist, in dem ein Schlitten geführt als Teil des Einstellteiles das Aus- und Einfahren des jeweiligen Bildschirms ermöglicht. Als einstückiger Bestandteil des Schlittens ist bei der bekannten Lösung als weitere Komponente des Einstellteils eine Gelenkstellenaufnahme mit zwei Gelenkstellen vorgesehen, die im unteren Drittel an der Stirnseite des jeweiligen Bildschirms angreift und dessen Verschwenken in verschiedenen Ebenen in der Gebrauchsstellung für den Sitzbenutzer ermöglicht. Ferner ist an dem Schlitten eine flexible Energiezuführung für den jeweiligen Bildschirm angelenkt. Obwohl die Gelenkstellenhalterung an der Stirnseite des jeweiligen Bildschirms angreift, ist aufgrund der seitlichen Schlittenanordnung innerhalb der Konsole relativ viel Einbauraum verbraucht und da der Schwerpunkt des Bildschirms oberhalb der Gelenkstellenanbindung sitzt, ist die Führungsstabilität beeinträchtigt. Auch baut aufgrund der Teilevielfalt die bekannte Lösung konstruktiv schwer auf, was insbesondere im Einsatzbereich von Luftfahrzeugen nachteilig ist.

Durch die US-A-5 732 919 ist wiederum eine Schienenführungslösung innerhalb einer Aufnahmekonsole für einen Bildschirm bekannt, wobei bei der dahingehend bekannten Lösung die Führungsschiene in platzsparender Weise, die den Bildschirm aufnehmende Konsole stirnseitig abschließt. Das Ausfahren der bekannten Bildschirmeinheit erfolgt unterstützt über einen Energiespeicher in Form einer Zugfeder und am unteren Ende der Bildschirmeinheit sitzt diese schwenkbar über eine Gelenkstelle gehalten auf einem schlittenartigen Rahmenteil, der als Führungsschlitten dient. Der insoweit nur über das bodenseitige Rahmenteil gehaltene Bildschirm, an dessen unterem Ende die einzige Gelenkstelle zum Einstellen der Bildschirmneigung in einer Schwenkrichtung sitzt, genügt insoweit nicht erhöhten Stabilitätskriterien, da wiederum sein Schwerpunkt oberhalb der Gelenkstelle mit ihrer Gelenkachse liegt.

Ausgehend von diesem Stand der Technik liegt daher der Erfindung die Aufgabe zugrunde, einen Fahrzeugsitz, insbesondere Fluggastsitz, der betrachteten Art dahingehend weiter zu verbessern, dass für in dem Sitz integrierbare Bildschirme eine genaue Positionierung in ihrer Gebrauchsstellung erreichbar ist unter Einsatz von einem Minimum an Bauteilen. Eine dahingehende Aufgabe löst ein Sitz mit den Merkmalen des Patentanspruches 1 in seiner Gesamtheit.

Dadurch, dass gemäß dem kennzeichnenden Teil des Patentanspruches 1 das Verschiebeteil stangenartig ausgebildet ist und an einer Längsseite des Bildschirms angeordnet ist, dass das Einstellteil im Bereich des oberen Endes des Bildschirms eine erste Gelenkstelle aufweist, die zumindest eine Schwenkbewegung um die Achse des stangenartigen Verschiebeteils erlaubt, und dass benachbart zu der ersten Gelenkstelle eine weitere zweite Gelenkstelle im oberen Rand des Bildschirms angeordnet ist, die eine weitere Schwenkbewegung des Bildschirms um eine Achse quer zum stangenartigen Verschiebeteil erlaubt, ist der jeweilige Bildschirm oder Monitor an einem Tragarm hängend installiert, gebildet aus dem Einstellteil, den genannten Gelenkstellen sowie dem oberen Rahmenteil des jeweiligen Bildschirms. Mit der dahingehenden Lösung ist es erstmals bei Fluggastsitzen möglich, so genannte 15 Zoll-Monitore als Bildschirme zu verwenden. Durch das erfindungsgemäße Prinzip, bei der das am jeweiligen Bildschirm an seiner Längsseite stangenartig verlaufende Verschiebeteil in der Art eines Standrohres angreift, das vertikal linear geführt ist, ist die relevante Führung über nur eine Führungsbahn realisiert, die darüber hinaus als strukturell integriertes Bauteil der Aussteifung der Mittelkonsole dient. Hierdurch ist eine saubere und genaue Positionierung der Monitore bzw. Bildschirme sichergestellt. Die erfindungsgemäße Lösung kommt mit einem Minimum an Bauteilen aus, was zum einen Gewichtsparen hilft und zum anderen die Herstellungskosten senkt.

Da das Einstellteil im Bereich des oberen Endes des Bildschirmes benachbart zueinander die beiden Gelenkstellen aufweist, die zum einen eine Schwenkbewegung um die Achse des stangenartigen Verschiebeteils erlauben und zum anderen in einer Richtung quer dazu, lässt sich der Bildschirm in Richtung des Sitzbenutzers verschwenken, und um die weitere zweite Gelenkstelle ist der Bildschirm gegenüber dem Sitzbenutzer in der Neigung einstellbar.

Bei einer weiteren bevorzugten Ausführungsform ist vorgesehen, dass das stangenartige Verschiebeteil eine Höheneinstellung aufweist, die ein Festlegen des Bildschirmes außerhalb der Konsole in einem vorgebbaren Höhenbereich ermöglicht. Dergestalt kann der Bildschirm von seiner Einstellbarkeit her sich an unterschiedliche Körpergrößen eines Sitzbenutzers sinnfällig anpassen.

Weitere vorteilhafte Ausführungsformen sind Gegenstand der sonstigen Unteransprüche.

Im folgenden wird das erfindungsgemäße Konsolen-Bildschirmsystem anhand eines Ausführungsbeispiels nach der Zeichnung näher erläutert.

Dabei zeigen in prinzipieller und nicht maßstäblicher Darstellung die
- Fig.1: eine perspektivische Ansicht auf die Konsole mit zwei Bildschirmen, einmal in der ausgezogenen Stellung, einmal in der Ruhestellung gezeigt;
- Fig.2: in der Art einer Explosionszeichnung die Gelenksituation bezogen auf den linken oberen Bildschirmrand nach der Fig.1.

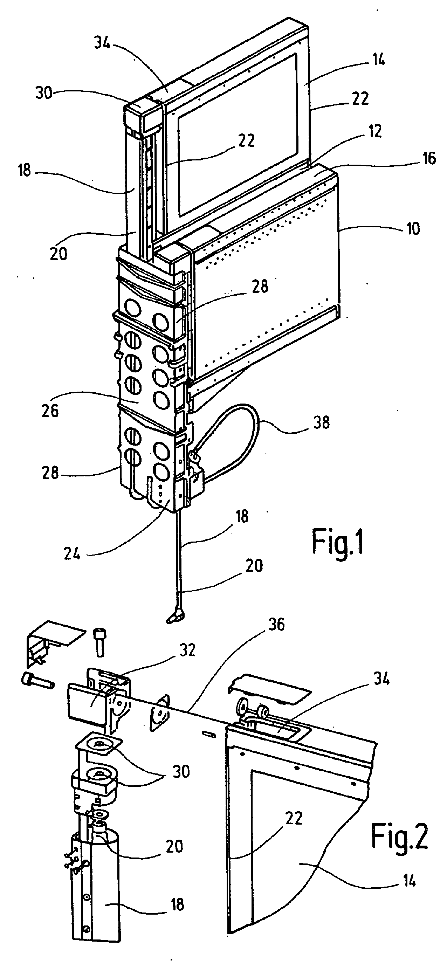

Fig. 1 zeigt den dem Betrachter zugewandten Teil einer Konsole 10, wie sie als Mittelkonsole zwischen zwei nebeneinanderliegenden Fluggastsitzen (nicht dargestellt) angeordnet ist. Die dahingehende Konsole 10 ist vorzugsweise schalenartig aus Blechtafeln zusammengesetzt, die mittig eine rechteckförmige Aufnahme 12 begrenzen. In der dahingehenden Aufnahme 12 sind zwei Bildschirme 14,16 integrierbar, wobei der Bildschirm 14 nach der Fig.1 in einer ausgezogenen Stellung dargestellt ist und der Bildschirm 16 ist in seiner Ruhestellung vollständig in die Aufnahme 12 versenkt. Über ein Einstellteil 18 läßt sich der jeweilige Bildschirm 14,16 aus seiner Ruhestellung in der Aufnahme 12 in eine Gebrauchsstellung bringen, was im folgenden noch näher erläutert werden wird. Das jeweilige Einstellteil 18 weist ein stangenartiges Verschiebeteil 20 auf, das in Blickrichtung auf die Fig.1 gesehen nach oben hin in einer holmartigen Verlängerung endet und nach unten hin stangenartig fortgeführt ist. Das dahingehende Verschiebeteil 20 ist an einer der beiden Längsseiten 22 des jeweiligen Bildschirmes 14,16 angeordnet. Ferner ist das Verschiebeteil 20 längsverfahrbar innerhalb einer Führung 24 in der Konsole 10 geführt. Die genannte Führung 24 der Konsole 10 besteht im wesentlichen aus einem Führungskanal 26 in der Art eines Lochbleches ausgebildet, der zum einen die Konsole 10 nach vorne in Richtung der Sitzteilvorderkante (nicht dargestellt) abschließt, wobei zwei seitliche Begrenzungsflächen 28 des Führungskanals 26 randseitige Bereiche des stangenartigen Verschiebeteils, soweit unmittelbar zugeordnet, übergreifen.

Das genannte Einstellteil 18 weist im Bereich des oberen Endes des Bildschirmes 14,16 eine erste Gelenkstelle 30 auf, die zumindest eine Schwenkbewegung um die Hochachse des stangenartigen Verschiebeteils 20 erlaubt. Die dahingehende erste Gelenkstelle 30 ist, wie dies die Darstellung nach der Fig.2 zeigt, über drehbare Lager gebildet, die in einem Gehäuse 32 aufgenommen die angesprochene Schwenkbewegung erlauben. Somit ist in Blickrichtung auf die Fig.1 gesehen der dortige Bildschirm 14 in seiner ausgehobenen Stellung aus dieser entgegen dem Uhrzeigersinn in eine querliegende Gebrauchsstellung verschwenkbar, bei der der Bildschirm 14 als Teil des Monitorgehäuses parallel zum vorderen Begrenzungsblech des Führungskanals 26 verläuft und mithin quer zu dem weiteren Bildschirm 16 in seiner in Fig.1 dargestellten Ruhestellung.

Neben der ersten Gelenkstelle 30 ist benachbart zu dieser eine weitere zweite Gelenkstelle 34 vorhanden, die im oberen Rahmenteil des Bildschirms 14 integriert eine weitere Schwenkbewegung des Bildschirmes 14 um eine Achse 36 quer zur Hochachse des stangenartigen Verschiebeteils 20 erlaubt. Die jeweilige Gelenkstelle 30,34 weist eine nicht näher dargestellte Anschlagbegrenzung auf, die die mögliche Schwenkbewegung des jeweiligen Bildschirmes 14,16 begrenzt, um dergestalt eine sinnfällige Nutzung zu ermöglichen. Darüber hinaus weist das stangenartige Verschiebeteil 20 in Verbindung mit dem Außengehäuse des Einstellteils 18 eine nicht näher dargestellte Höheneinstellung auf, die ein Festlegen des Bildschirms 14,16 außerhalb der Konsole 10 in einem vorgebbaren Höhenbereich ermöglicht. Auf diese Art und Weise kann ein ausgestellter, in der Gebrauchsstellung befindlicher Bildschirm 14,16 in der Höhe eingestellt werden, um dergestalt die Benutzung von Personen unterschiedlicher Körpergröße zu ermöglichen.

Jeder Bildschirm 14,16 ist darüber hinaus mit einem Versorgungskabel 38 versehen, das beispielsweise der elektrischen Stromzufuhr dient; aber auch als Informationen übermittelndes Kabel dienen kann, und das dahingehende Versorgungskabel 38 ist insofern flexibel innerhalb der Konsolenaufnahme 12 geführt, dass es der jeweiligen Aus- und Einfahrbewegung des Bildschirms 14,16 nachfolgen kann. Wie des weiteren die Fig.2 verdeutlicht, sind zwei Bildschirme 14,16 in der Konsole 10 aufnehmbar, wobei in der Ruhestellung innerhalb der Konsole 10 die beiden Bildschirme 14,16 einander zugewandt sind, was Beschädigungen an der empfindlichen Oberfläche vermeiden hilft. Bei einer nicht näher dargestellten Ausführungsform besteht auch die Möglichkeit, die Rückseite des Bildschirmes 14,16 als Funktionsfläche zu nutzen, beispielsweise im Sinne einer Tischfläche.

Mit der erfindungsgemäßen Lösung ist sichergestellt, dass der Bildschirm 14,16 bzw. der Monitor an einem Tragarm hängend installiert ist, gebildet aus Einstellteil 18, den genannten Gelenkstellen 30,34 sowie dem oberen Rahmenteil des jeweiligen Bildschirms 14,16. Mit der dahingehenden Lösung ist es erstmals insbesondere an Fluggastsitzen möglich, sog. 15-Zoll-Monitore als Bildschirme 14,16 zu verwenden. Über die genannten Gelenkstellen 30,34 ist die Beweglichkeit des Bildschirms 14,16 auf zwei unabhängig gelenkige Freiheitsgrade aufgeteilt und der Tragarm dient gleichzeitig als Kabelführung und gegebenenfalls für die notwendige Entlüftung bei Wärmeentwicklung der Bildschirme 14,16. Durch das erfindungsgemäße Prinzip Standrohr, das vertikal linear geführt ist, ist die relevante Führung über nur eine Führungsbahn realisiert, die darüber hinaus als strukturell integriertes Bauteil der Aussteifung der Mittelkonsole 10 dient. Eine entsprechende Sekundärführung auf der dem Standrohr gegenüberliegenden Seite stellt die saubere und genaue Positionierung der Monitore in der VDU sicher. Die genannte Lösung kommt mit einem Minimum an Bauteilen aus, was zum einen Gewicht sparen hilft und zum anderen die Herstellkosten senkt.
Sofern in den Anmeldeunterlagen von einem Bildschirm 14,16 die Rede ist, ist dem Grunde nach ein Bildschirm-Monitor gemeint, der von einem Bildschirmrahmenteil umgeben ist. Die genannten Einstellteile für die Bildschirme 14,16 können in Fortgestaltung auch teleskopartig ausfahrbar sein, wobei für die dahingehenden Ein- und Ausfahrbewegungen die Ansteuerung über einen Fremdantrieb (nicht dargestellt) möglich wäre.

## Patentansprüche

1. Fahrzeugsitz, insbesondere Fluggastsitz mit Sitzkomponenten in Form eines Sitzteils, einer Rückenlehne und zumindest einer das Sitzteil seitlich begrenzenden, eine Armauflage bildenden Konsole (10), die eine Aufnahme (12) aufweist, wobei in der Aufnahme (12) mindestens ein Bildschirm (14,16) in einer Ruhestellung versenkbar ist und über ein Einstellteil (18) mit Gelenkstellen (30, 34) aus der Ruhestellung in eine Gebrauchsstellung und umgekehrt bringbar ist, wobei in der Gebrauchsstellung für einen Sitzbenutzer der Bildschirminhalt einsehbar ist, und wobei das Einstellteil (18) ein Verschiebeteil (20) aufweist, das längsverfahrbar innerhalb einer Führung (24) der Konsole (10) geführt ist und an einer Längsseite (22) des Bildschirms (14, 16) angeordnet ist, **dadurch gekennzeichnet, dass** das Verschiebeteil (20) stangenartig ausgebildet ist und dass das Einstellteil (18) im Bereich des oberen Endes des Bildschirms (14,16) eine erste Gelenkstelle (30) aufweist, die zumindest eine Schwenkbewegung um die Achse des stangenartigen Verschiebeteils (20) erlaubt, und dass benachbart zu der ersten Gelenkstelle (30) eine weitere zweite Gelenkstelle (34) im oberen Rand des Bildschirms (14,16) angeordnet ist, die eine weitere Schwenkbewegung des Bildschirms (14,16) um eine Achse (36) quer zum stangenartigen Verschiebeteil (20) erlaubt.

2. Fahrzeugsitz nach Anspruch 1, **dadurch gekennzeichnet, dass** die Führung (24) der Konsole (10) im wesentlichen aus einem Führungskanal (26) besteht, der die Konsole (10) nach vorne in Richtung der Sitzteilvorderkante abschließt, und dass seitliche Begrenzungsflächen (28) des Führungskanals (26) randseitige Bereiche des stangenartigen Verschiebeteils (20) übergreifen.

3. Fahrzeugsitz nach Anspruch 1 oder 2, **dadurch gekennzeichnet, dass** die jeweilige Gelenkstelle (30,34) eine Anschlagbegrenzung aufweist, die die mögliche Schwenkbewegung des Bildschirms (14,16) begrenzt.

4. Fahrzeugsitz nach einem der Ansprüche 1 bis 3, **dadurch gekennzeichnet, dass** das stangenartige Verschiebeteil (20) eine Höheneinstellung aufweist, die ein Festlegen des Bildschirms (14,16) außerhalb der Konsole (10) in einem vorgebbaren Höhenbereich ermöglicht.

5. Fahrzeugsitz nach einem der Ansprüche 1 bis 4, **dadurch gekennzeichnet, dass** jeder Bildschirm (14,16) mit einem Versorgungskabel (38) versehen ist, das flexibel ausgestaltet innerhalb der Konsolenaufnahme (12) der jeweiligen Aus- und Einfahrbewegung des Bildschirms (14,16) nachfolgt.

6. Fahrzeugsitz nach einem der Ansprüche 1 bis 5, **dadurch gekennzeichnet, dass** zwei Bildschirme (14,16) in der Konsole (10) aufnehmbar sind und dass in der Ruhestellung innerhalb der Konsole (10) die beiden Bildschirme (14,16) einander zugewandt sind.

7. Fahrzeugsitz nach einem der Ansprüche 1 bis 6, **dadurch gekennzeichnet, dass** die Rückseite des Bildschirmes (14,16) eine Funktionsfläche im Sinne einer Tischfläche ausbildet.

## Claims

1. Vehicle seat, in particular aircraft passenger seat, with seat components in the form of a seat part, a back rest, and at least one console (10) delimiting the seat part at the side and forming an arm rest comprising a take-up (12), whereby at least one monitor (14, 16) can be lowered into the take-up (12) in a resting position, which can be brought from the resting position into a usage position and vice versa by means of an adjustment part (18) with joints (30, 34), whereby a monitor unit is visible to a seat user in the usage position, and whereby the adjustment part (18) comprises a displacement part (20) which is held longitudinally displaceable within a guide (24) of the console (10), **characterised in that** the displacement part (20) takes on a rod-like form and is located on a longitudinal side (22) of the monitor (14, 16), **in that** the adjustment part (18) comprises a first joint (30) in the area of the upper end of the monitor (14, 16), the same allowing at least one tilting movement around the axis of the rod-like displacement part (20), and **in that** a further second joint (34) is located on the upper edge of the monitor (14, 16) adjacent to the first joint (30), the same allowing a further tilting movement of the monitor (14, 16) around an axis (36) transverse to the rod-like displacement part (20).

2. Vehicle seat according to Claim 1, **characterised in that** the guide (24) of the console substantially consists of a guide channel (26) which closes the console (10) at the front in the direction of the front seat edge, and **in that** side delimiting surfaces (28) of the guide channel (26) straddle edge areas of the rod-like displacement part (20).

3. Vehicle seat according to Claim 1 or 2, **characterised in that** the relevant joint (30, 34) comprises an abutment limiter which delimits the possible tilting movement of the monitor (14,16).

4. Vehicle seat according to one of the Claims 1 to 3, **characterised in that** the rod-like displacement part (20) comprises a height adjustment which enables a fixing of the monitor (14, 16) outside if the console (10) within a predetermined height range.

5. Vehicle seat according to one of the Claims 1 to 4, **characterised in that** each monitor (14, 16) is equipped with a flexible supply cable (38) inside the console take-up (12), which follows the relevant extending and retracting movement of the monitor (14, 16).

6. Vehicle seat according to one of the Claims 1 to 5, **characterised in that** two monitors (14, 16) can be received by the console (10), and **in that** the two monitors (14, 16) face each other in the resting position within the console (10).

7. Vehicle seat according to one of the Claims 1 to 6, **characterised in that** the rear of the monitors (14, 16) forms a functional surface in the sense of a table surface.

## Revendications

1. Siège de véhicule, notamment siège pour passager d'avion, ayant des composants de siège sous la forme d'une assise, d'un dossier et d'au moins une console (10) formant un accotoir, délimitant latéralement l'assise, qui comporte un logement (12), au moins un écran (14, 16) pouvant être escamoté en position de repos dans le logement (12) et pouvant être amené par l'intermédiaire d'un élément de réglage (18) ayant des zones articulées (30, 34) de la position de repos dans une position d'utilisation et inversement, le contenu de l'écran étant visible par un utilisateur du siège, en position d'utilisation et l'élément de réglage (18) comportant un élément de translation (20) qui est guidé de façon déplaçable en longueur dans un guidage (24) de la console (10) et qui est disposé sur un côté longitudinal (22) de l'écran (14, 16), **caractérisé en ce que** l'élément de translation (20) est conçu à la manière d'une barre et **en ce que** l'élément de réglage (18) comporte dans la zone de l'extrémité supérieure de l'écran (14, 16) un premier point d'articulation (30) permettant au moins un pivotement autour de l'axe de l'élément de translation (20) du type d'une barre et **en ce que** dans le voisinage du premier point d'articulation (30), un deuxième point d'articulation supplémentaire (34) est disposé dans le bord supérieur de l'écran (14, 16) et permet un pivotement supplémentaire de l'écran (14, 16) autour d'un axe (36), transversalement à l'élément de translation (20) du type d'une barre.

2. Siège de véhicule suivant la revendication 1, **caractérisé en ce que** le guidage (24) de la console (10) consiste sensiblement en un canal de guidage (26), qui ferme la console (10) vers l'avant, en direction de l'arête antérieure de l'assise et **en ce que** des surfaces de délimitation latérales (28) du canal de guidage (26) chevauchent des zones côté bordure de l'élément de translation (20) du type d'une barre.

3. Siège de véhicule suivant la revendication 1 ou 2, **caractérisé en ce que** le point d'articulation respectif (30, 34) comporte une délimitation par butée, qui limite le pivotement possible de l'écran (14, 16).

4. Siège de véhicule suivant l'une quelconque des revendications 1 à 3, **caractérisé en ce que** l'élément de translation (20) du type d'une barre comporte un réglage en hauteur, permettant une fixation de l'écran (14, 16) à l'extérieur de la console (10), dans une plage de hauteur prédéfinissable.

5. Siège de véhicule suivant l'une quelconque des revendications 1 à 4, **caractérisé en ce que** chaque écran (14, 16) est muni d'un câble d'alimentation (38) qui, conçu de façon flexible, suit à l'intérieur du logement de la console (12) le déplacement de sortie ou d'entrée de l'écran (14, 16).

6. Siège de véhicule suivant l'une quelconque des revendications 1 à 5, **caractérisé en ce que** deux écrans (14, 16) peuvent être accueillis dans la console (10) et **en ce qu'**en position de repos à l'intérieur de la console (10), les deux écrans (14, 16) se font face.

7. Siège de véhicule suivant l'une quelconque des revendications 1 à 6, **caractérisé en ce que** la face arrière de l'écran (14, 16) forme une surface fonctionnelle, au sens d'une surface de table.
